(19) Europäisches Patentamt
European Patent Office
Office européen des brevets

(11) Veröffentlichungsnummer : **0 044 275**
**B1**

(12) **EUROPÄISCHE PATENTSCHRIFT**

(45) Veröffentlichungstag der Patentschrift : **28.08.85**

(51) Int. Cl.[4] : **C 08 L 63/00**, C 14 C 11/00, C 08 G 59/56, C 08 G 59/58

(21) Anmeldenummer : **81810272.5**

(22) Anmeldetag : **06.07.81**

(54) **Mischungen aus Umsetzungsprodukten auf der Basis von Epoxyden, primären Aminen und Fettsäuren und aus Aminoplastvorkondensaten sowie deren Herstellung und Verwendung als Lederzurichtmittel.**

(30) Priorität : **11.07.80 CH 5350/80**

(43) Veröffentlichungstag der Anmeldung : **20.01.82 Patentblatt 82/03**

(45) Bekanntmachung des Hinweises auf die Patenterteilung : **28.08.85 Patentblatt 85/35**

(84) Benannte Vertragsstaaten : **BE CH DE FR GB IT LI NL**

(56) Entgegenhaltungen :
**CH-A- 606 445**
**FR-A- 2 246 580**
**FR-A- 2 352 060**
**US-A- 3 716 402**
**US-A- 3 843 391**

(73) Patentinhaber : **CIBA-GEIGY AG**
**Postfach**
**CH-4002 Basel (CH)**

(72) Erfinder : **Töpfl, Rosemarie**
**Dorneckstrasse 68**
**CH-4143 Dornach (CH)**

**EP 0 044 275 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aus FR-A-2 246 580 sind Zusammensetzungen bekannt, die
— Umsetzungsprodukte aus Epoxyden, $C_{12}$-$C_{24}$ Fettaminen und polymerisierten Fettsäuren, und
— Aminoplastvorkondensate
enthalten.

Aus CH-A-606 445 sind Zusammensetzungen bekannt, die
— Reaktionsprodukte aus Epoxyden, $C_{12}$-$C_{24}$ Fettaminen und Carboxylgruppen enthaltenden Umsetzungsprodukten (aus mehrwertigen, aliphatischen Alkoholen, Epoxyden und Dicarbonsäuren) und
— Aminoplastvorkondensate
enthalten.

Aus FR-A-2 352 060 sind ferner Zusammensetzungen bekannt, die
— Umsetzungsprodukte aus Epoxyden und polymerisierten Fettsäuren und
— Aminoplastvorkondensate
enthalten, wobei das Umsetzungsprodukt in Abwesenheit von Aminen hergestellt wird.

Im Gegensatz hierzu werden erfindungsgemäss Zusammensetzungen zur Verfügung gestellt, die Umsetzungsprodukte und Aminoplastvorkondensate enthalten, wobei neben Epoxyden und polymerisierten Fettsäuren jedoch primäre $C_2$-$C_8$ Amine zur Herstellung der Umsetzungsprodukte eingesetzt werden.

Gegenstand der vorliegenden Erfindung sind somit Mischungen aus Umsetzungsprodukten (1) und Aminoplastvorkondensaten (2), die dadurch gekennzeichnet sind, dass sie

(1) 60 bis 90 Gewichtsprozent eines Umsetzungsproduktes aus

(a) 1 Epoxydgruppenäquivalent eines Epoxyds, das pro Molekül mindestens zwei Epoxygruppen aufweist,

(b) 0,4 bis 0,5 Mol eines primären Amins mit 2 bis 8 Kohlenstoffatomen,

(c) 0,4 bis 0,6 Säuregruppenäquivalent einer polymerisierten Fettsäure, die sich von monomeren, ungesättigten Fettsäuren mit 16 bis 22 Kohlenstoffatomen ableitet, und

(d) 0 bis 0,5 Mol einer difunktionellen Verbindung, die als funktionelle Gruppe mindestens eine Halogenalkyl-, Vinyl- oder Carbonsäureestergruppe und gegebenenfalls höchstens eine Epoxyd-, Carbonsäure-, Hydroxyl- oder Nitrilgruppe aufweist, und

(2) 10 bis 40 Gewichtsprozent eines mit Alkyl mit 1 bis 6 Kohlenstoffatomen verätherten Aminoplastvorkondensats

enthalten.

Weitere Erfindungsgegenstände sind die Herstellung der Mischungen der angegebenen Art, deren Verwendung als Lederzurichtmittel, eine Applikationsverfahren der erfindungsgemässen Mischungen zum Zurichten von Leder, die wässrig-organische Zubereitung zur Durchführung des Applikationsverfahrens, welche die erfindungsgemässen Mischungen enthält, und das nach dem Applikationsverfahren zugerichtete Leder.

Die Epoxyde, Reaktionskomponente (a) des Umsetzungsproduktes (1), leiten sich vorzugsweise von mehrwertigen Phenolen bzw. Polyphenolen, wie Resorcin, Phenol-Formaldehyd-Kondensationsprodukten vom Typus der Resole oder Novolake ab. Insbesondere Bisphenole wie Bis-(4'-hydroxyphenyl)-methan und vor allem 2,2-Bis-(4'-hydroxyphenyl)-propan, auch Bisphenol A genannt, werden als Ausgangsverbindungen zur Herstellung der Epoxyde bevorzugt. Besonders genannt seien hier Poly-, vorzugsweise Diglycidyläther des 2,2-Bis-(4'-hydroxyphenyl)-propans, vor allem solche, die einen Epoxydgehalt von 0,3 bis 2,2 Epoxygruppenäquivalenten/kg aufweisen, und welche z. B. der Formel

(1)

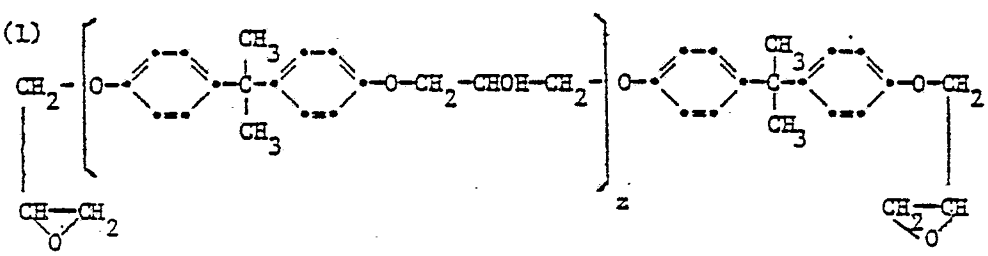

entsprechen, worin z eine Durchschnittszahl im Werte von vorzugsweise 2 bis 18, insbesondere 5 bis 12 bedeutet. Solche Epoxyde werden im allgemeinen durch Umsetzung von Epichlorhydrin mit 2,2-Bis-(4'-hydroxyphenyl)-propan erhalten.

Als primäres Amin mit 2 bis 8 Kohlenstoffatomen für die Reaktionskomponente (b) kommen aromatische und gegebenenfalls äthylenisch ungesättigte aliphatische Amine in Betracht. Gesättigte Amine, vor allem Cycloalkyl- und insbesondere Alkylamine sind bevorzugt. Als spezifische Vertreter der Amine seien Anilin, Benzylamin, Allylamin, vor allem Cyclohexylamin und insbesondere Methyl-, Aethyl-,

Isopropyl-, Butyl-, Amyl-, Hexyl-, Heptyl- und Aethylhexylamin genannt. Cyclohexyl-, n-Butyl- und 2-Aethylhexylamin stehen im Vordergrund des Interesses.

Die Reaktionskomponente (c) betrifft polymerisierte, vorzugsweise di- bis trimerisierte Fettsäuren, welche durch Polymerisation monomerer, ungesättigter Fettsäuren mit 16 bis 22, insbesondere 16 bis 18 Kohlenstoffatomen in bekannter Weise erhalten werden. Geeignet sind vor allem solche Fettsäuren als Ausgangsprodukte, die mindestens eine, vorzugsweise 2 bis 5 und insbesondere 2 oder 3 äthylenisch ungesättigte Bindungen enthält, wie Hexadecensäure, Oelsäure, Elaidinsäure, Hiragonsäure, Licansäure, Eläosterarinsäure, Arachidonsäure, Clupanodonsäure und insbesondere Linol- und Linolensäure. Diese Fettsäuren, gegebenenfalls auch ihre Gemische, können aus natürlichen Oelen und Fette, worin sie vor allem als Glyzeride enthalten sind, gewonnen werden. Bevorzugt sind technische Gemische di- bis trimerisierter Fettsäuren der angegebenen Art, welche stets einen kleinen Gehalt an monomeren Säuren aufweisen. Im Vordergrund des Interesses stehen technische Gemische di- bis trimerisierter Linol- oder Linolensäuren, die in der Regel 75 bis 95 Gewichtsprozent dimerisierte Säuren, 4 bis 25 Gewichtsprozent trimerisierte Säuren und bis etwa 3 Gewichtsprozent monomere Säuren enthalten und im allgemeinen 2,5 bis 4,0 Säuregruppenäquivalente pro kg aufweisen.

Bei den fakultativen, difunktionellen Reaktionskomponente (d) handelt es sich um difunktionelle organische Verbindungen, welche als funktionelle Gruppen Chloralkyl-, Bromalkyl-, Vinyl- oder Carbonsäurealkylestergruppen oder höchstens eine Nitril-, Epoyd- oder Carbonsäuregruppe zusammen mit einer anderen funktionellen Gruppe der angegebenen Art enthalten. Aliphatisch difunktionelle organische Verbindungen sind besonders geeignet. Es handelt sich z. B. um Epihalogenhydrine wie das Epibromhydrin oder vor allem das Epichlorhydrin. Andere in Frage kommende difunktionelle Verbindungen sind z. B. Glycerindichlorhydrin, Acrylsäure, Methylolacrylamid und Acrylnitril. Epihalogenhydrine, vorzugsweise Epichlorhydrin, sowie Acrylsäure und insbesondere Acrylnitril stehen im Vordergrund des Interesses.

Falls die Komponente (d) mit verwendet wird, wird vorzugsweise 0,1 bis 0,5 Mol der fakultativen Reaktionskomponente (d) eingesetzt.

Die als Mischungskomponente (2) dienenden Aminoplastvorkondensate sind zweckmässigerweise vollständig oder insbesondere teilweise verätherte Methylolverbindungen von stickstoffhaltigen Aminoplastbildnern wie Harnstoff, Thioharnstoff, Harnstoff derivaten z. B. Aethylenharnstoff, Propylenharnstoff oder Glyoxalmonourein. Vorzugsweise kommen jedoch verätherte Methylolaminotriazine in Betracht wie z. B. Alkyläther von hochmethyloliertem Melamin, deren Alkylreste 1 bis 6, vorzugsweise 1 bis 4 Kohlenstoffatome enthalten. Als Alkylreste kommen u. a. Methyl-, Aethyl-, n-Propyl-, Isopropyl-, n-Butyl-, ferner n-Hexylreste in Betracht. Neben solchen Alkylresten können auch noch weitere Reste, z. B. Polyglykolreste im Molekül vorhanden sein. Bevorzugt sind im übrigen n-Butyläther eines hochmethylolierten Melamins, die 2 bis 3 n-Butylgruppen im Molekül enthalten. Unter hochmethylolierten Melaminen sind hier solche mit durchschnittlich mindestens 5, z. B. 5 bis 6, vorzugsweise etwa 5,5 Methylolgruppen zu verstehen und die einfachheitshalber Hexamethylolmelamin genannt werden. Alkyläther von methyloliertem Harnstoff, von den genannten methylolierten Harnstoffderivaten oder vorzugsweise von methylolierten Aminotriazinen sind bevorzugt. Die genannten Hexamethylolmelaminäther, insbesondere Hexamethylolmelamin-di- und tri-n-butyläther, stehen im Vordergrund des Interesses.

Zur Herstellung der erfindungsgemässen Mischungen werden nach an sich bekannten Methoden die Reaktionskomponenten (a), (b) und (c) vorzugsweise gleichzeitig und gegebenenfalls anschliessend die Reaktionskomponente (d) zum Umsetzungsprodukt (1) umgesetzt, worauf das erhaltene Umsetzungsprodukt (1) anschliessend mit der Mischungskomponente (2) vermischt wird, wobei die Reaktionskomponenten (a), (b), (c) und gegebenenfalls (d) und die Mischungskomponente (2) vorzugsweise in den vorstehend angegebenen Mengenverhältnissen eingesetzt werden und das Umsetzen der Reaktionskomponenten (a), (b), (c) und gegebenenfalls (d) und das anschliessende Vermischen mit der Mischungskomponente (2) vorzugsweise ohne Isolierung des Umsetzungsproduktes (1) erfolgt.

Vorzugsweise wird die Umsetzung der Komponente (a), (b), (c) und gegebenenfalls (d) bei erhöhter Temperatur, z. B. 80 bis 120 °C, insbesondere bei etwa 100 °C durchgeführt. Hingegen wird das Vermischen des Umsetzungsproduktes (1) mit der Mischungskomponente (2) stets bei Temperaturen bis höchstens 40 °C, vorzugsweise bei Raumtemperatur (15-30 °C) durchgeführt.

Sowohl die Umsetzungen der Reaktionskomponenten (a), (b), (c) und gegebenenfalls (d) als auch das Vermischen des Umsetzungsproduktes (1) mit der Mischungskomponente (2) erfolgt vorzugsweise in Gegenwart eines organischen Lösungsmittels. Bei der Umsetzung der Reaktionskomponenten (a), (b), (c) und gegebenenfalls (d) werden hierbei im allgemeinen wasserunlösliche Lösungsmittel mit hohem Lösungsvermögen für die verwendeten, lipophilen Reaktionskomponenten eingesetzt, wobei sich die Lösungsmittel inert verhalten, d. h. mit den Reaktionskomponenten nicht reagieren. Für diesen Zweck eignen sich u. a. flüssige aliphatische Carbonsäureester, deren Siedepunkt vorzugsweise über der Umsetzungstemperaur, d. h. über 80 bis 120 °C liegt, insbesondere Alkylester von Monocarbonsäuren mit insgesamt 5 bis 8 Kohlenstoffatomen. Als Vertreter solcher Ester sei u. a. n-Butylacetat erwähnt. Falls die Reaktionskomponenten (a), (b), (c) und gegebenenfalls (d) eingesetzt werden, deren lipophiler Charakter nicht stark ausgeprägt ist, genügt der Einsatz von wasserlöslichen inerten, organischen Lösungsmitteln, und zwar zweckmässigerweise solcher, die mit Wasser beliebig mischbar sind. Hierbei kommen vor allem Alkanole und Alkan-diole oder deren Aether sowie niedermolekulare Amide in Betracht. Als spezifische

Vertreter solcher Lösungsmittel seien Dioxan, Isopropanol, Aethylenglykol-n-butyläther (auch n-Butylglykol genannt), Diäthylenglykolmonobutyläther und Dimethylformamid erwähnt. Das Vermischen der Umsetzungsprodukte (1) mit den Mischungskomponenten (2) erfolgt in der Regel in Gegenwart der vorstehend erwähnten Lösungsmittel, da die Umsetzungsprodukte (1) vorzugsweise nicht isoliert werden. Beim Vermischen kann man aber auch den vorstehend genannten Lösungsmitteln zweckmässigerweise Kohlenwasserstoffe wie Benzin, Benzol, Toluol, Xylol und vor allem halogenierte Kohlenwasserstoffe wie Methylenbromid, Tetrachlorkohlenstoff, Aethylenchlorid, Aethylenbromid, s-Tetrachloräthan, insbesondere auch Trichlor- und Perchloräthylen zusetzen.

Die Applikation auf Leder erfolgt in der Regel aus wässerigem Medium, in dem die Umsetzungsprodukte in emulgierter Form vorliegen. Eine Applikation aus organischen Lösungen ist ebenfalls möglich. Falls die Applikation im bevorzugten, wässerigen Medium erfolgt vermischt man zu diesem Zweck die erfindungsgemässen Mischungen mit Netz- und Dispergiermitteln und Wasser um stabile wässerige Emulsionen zu erhalten, die einen pH-Wert von etwa 4 bis 8, vorzugsweise 4 bis 6, aufweisen. Der Wirksubstanzgehalt, d. h. der Gehalt an Trockensubstanz der Umsetzungsprodukte (1) und Mischungskomponenten (2) liegt bei etwa 10 bis 40 Gewichtsprozent. Geeignete Netz- und Dispergiermittel sind beispielsweise Addukte aus einem Alkylenoxyd, vorzugsweise Aethylenoxyd, und höhermolekularen, aliphatischen oder cycloaliphatischen Aminen und Alkoholen, ferner Fettsäuren und Fettamiden, die gegebenenfalls an den Hydroxylgruppen auch mit mehrbasischen anorganischen oder organischen Säuren verestert sein können. Ferner können diese Verbindungen auch noch mit weiteren Komponenten umgesetzt werden, um z. B. eine Vernetzungswirkung zu erreichen. Aethoxylierte Alkohole, die sich von Harzsäuren ableiten, die mit z. B. Hexamethylendiisocyanat versetzt sind, eignen sich besonders gut als Dispergiermittel.

Die Applikationsflotten können neben den emulgierten Umsetzungsprodukten bzw. den Gemischen aus den Umsetzungsprodukten und den Aminoplastvorkondensaten noch weitere Zusätze wie Säuren, Säureester oder Salze als Vernetzungskatalysatoren oder auch andere Ausrüst- oder Veredlungsmittel, d. h. Lederhilfsmittel wie etwa Wachsemulsionen oder Mattierungsmittel enthalten. Als Säuren seien z. B. Phosphor-, Schwefel- und Salzsäure genannt. Phosphorsäure und deren Monoalkylester mit 1 bis 4 Kohlenstoffatomen eignen sich besonders gut, als Vernetzungskatalysatoren eingesetzt zu werden. Die Monoalkylester der Phosphorsäure enthalten stets eine geringe Konzentration an den entsprechenden Dialkylestern.

Die Menge an Wirksubstanz der erfindungsgemässen Mischungen (Lösungsmittel und Wasser nicht eingerechnet), bezogen auf das Substrat, beträgt zweckmässigerweise 1 bis 10 g/m$^2$ bei der Lederzurichtung. Die Applikation erfolgt in der Regel bei 20 bis 100 °C, vorzugsweise bei Raumtemperatur.

Die Applikation erfolgt nach bekannten Methoden, z. B. durch Tauchen, Bürsten, Foulardieren oder Tränken oder vorzugsweise durch Sprühen oder Spritzen.

Das so behandelte Leder wird dann getrocknet, z. B. bei Temperaturen von 30 bis 80 °C, vorzugsweise bei 50 bis 60 °C. Im allgemeinen dauert der Trocknungsprozess etwa 30 bis 120 Minuten.

Nach der Trocknung wird gegebenenfalls das Leder einer Wärmenachbehandlung von 90 (100) bis 150, vorzugsweise 100 bis 120 °C unterworfen, die zweckmässig unter Druck, z. B. 50 (80) bis 120 bar, durchgeführt wird. Diese fakultative Nachbehandlung erfolgt z. B. durch Kalandrieren, durch Zusammenpressen zwischen zwei geheitzen Metallplatten oder insbesondere durch Bügeln.

Das auszurüstende Leder kann beliebiger Herkunft sein, wobei vorzugsweise sogenannte Narbenleder verwendet werden, d. h. Leder, die auf der Nabenseite zugerichtet werden. Die Lederzurichtung kann zweckmässig in zwei Stufen erfolgen, indem man die erfindungsgemässen Zubereitungen z. B. zusammen mit einem für die Lederfärbung geeigneten Farbstoff oder Pigment appliziert, trocknet und dann eine farblose Zubereitung aufbringt, die der gefärbten Schicht z. B. einen zusätzlichen Glanz verleihen kann.

Die mit diesen Zurichtmitteln ausgerüsteten Leder weisen sehr gute Allgemeinechtheiten auf. Sie sind insbesondere sehr gut licht-, insbesondere nass- und trockenreibecht, ferner heissbügel- und knickecht. Auch die Alkoholreibechtheit ist besonders gut. Der Griff zeigt zudem eine deutliche Verbesserung, so dass das zugerichtete Leder einen erwünschten, trockenen Griff aufweist. Das erfindungsgemäss zugerichtete Leder kann somit als pflegeleicht bezeichnet werden ; es ist bei Berücksichtigung der Gesamtheit der Echtheiten einem Leder, das mit Polyurethanen oder Polyacrylaten zugerichtet ist, überlegen. Ferner kann die erhaltene Lederausrüstung antimikrobielle und fungizide Eigenschaften aufweisen, wobei gegenüber Vertretern der grampositiven und gramnegativen Bakterien, z. B. gegenüber Staphylococcus aureus, Eschericha coli und Proteus vulgaris, oder gegenüber Pilzen, z. B. Trichophyton mentagrophytes gute mikrobizide oder fungizide Wirkungen erhalten werden.

Zudem ist die erreichte Stapelbarkeit der erfindungsgemäss ausgerüsteten Leder vorteilhaft. Auch der hohe Glanz und die gute Polierbarkeit der zugerichteten Leder ist besonders vorteilhaft. Aufgrund der Vielzahl der vorstehend genannten, erhaltenen guten Eigenschaften eignet sich das erfindungsgemäss zugerichtete Leder vor allem in der Schuhindustrie eingesetzt zu werden.

Als weiterer Vorteil der erfindungsgemässen Mischungen ist deren gute Zugänglichkeit aufgrund der Beschaffenheit der Ausgangsmaterialien und der einfachen Arbeitsweise im Herstellungsverfahren sowie deren gute Kompatibilität mit vielen Hilfsmitteln, die in der Lederindustrie verwendet werden. Die vielseitige, d. h. universelle Anwendbarkeit der erfindungsgemässen Mischungen auf eine Vielzahl von

Lederarten ist als weiterer Vorteil zu bezeichnen.

In den nachfolgenden Beispielen sind Teile und Prozente Gewichtseinheiten.

Beispiel 1

87,7 g eines Epoxydes aus 2,2-Bis(4'-hydroxyphenyl)-propan und Epichlorhydrin (0,05 Epoxygruppenäquivalent eines Epoxydes, das 0,57 Epoxygruppenäquivalente/kg aufweist) werden in 27,5 g Essigsäure-n-butylester und 5 g n-Butanol gelöst. Dieser Lösung werden 1,8 g n-Butylamin (0,025 Mol) und 7,25 g eines technischen Gemisches aus etwa 75 % dimerisierter $C_{36}$ Säure und etwa 25 % trimerisierter $C_{54}$ Säure auf Basis Linol- und Linolensäure zugegeben (0,025 Säureäquivalente des Gemisches, das 3,45 Säureäquivalente/kg aufweist). Das Reaktionsgemisch wird auf 100 °C geheizt und 3 Stunden bei dieser Temperatur gehalten. Nach dieser Zeit werden dem Reaktionsgemisch noch 1,35 g Acrylnitril (0,025 Mol) zugegeben, worauf der Ansatz während weitere 30 Minuten bei 100 °C gehalten wird.

Durch Verdünnen des Reaktionsgemisches mit 65,5 g Perchloräthylen und 49 g Glykolsäurebutylester erhält man eine klare, viskose Lösung des Umsetzungsproduktes, deren Gehalt 40 % und deren Säurezahl 8 beträgt.

180 g der Lösung des Umsetzungsproduktes werden nun mit 14,4 g einer 70 %igen Lösung von Hexamethylolmelamin-di- und -tri-n-butyläther in n-Butanol bei Rautemperatur vermischt. Zur Aufarbeitung der erhaltenen Mischung als Lederzurichtmittel werden dazu 34 g einer 50 %igen wässerigen Lösung eines Umsetzungsproduktes aus 1 Mol Hydrobiethylalkohol und 200 Mol Aethylenoxyd, das mit 1 % Hexamethylendiisocyanat vernetzt ist, sowie 99,6 g Wasser unter Verwendung eines Emulgiergerätes zugesetzt. Man erhält eine feinteilige, lagerstabile, mit Wasser in jedem Verhältnis mischbare Oel-in-Wasser Emulsion deren Gehalt an Wirksubstanz 25 % beträgt.

Beispiel 2

Man führt die Umsetzung des Epoxydes, des Amins, des Säuregemisches und des Acrylnitrils wie in Beispiel 1 angegeben durch, setzt jedoch anstelle von 1,8 g n-Butylamin 3,2 g 2-Aethylhexylamin (0,025 Mol) ein.

Durch Verdünnung des Reaktionsgemisches mit 66,8 g Perchloräthylen und 49,75 g Glykolsäurebutylester erhält man eine klare, viskose Lösung des Umsetzungsproduktes, deren Gehalt 40 % und deren Säurezahl 6 beträgt.

Anschliessend wird wie in Beispiel 1 angegeben die Lösung des Umsetzungsproduktes mit dem methylolierten Melaminäther vermischt, die erhaltene Mischung mit dem Emulgator und Wasser versetzt und emulgiert, wobei ebenfalls eine feinteilige, lagerstabile, mit Wasser in jedem Verhältnis mischbare Oel-in-Wasser Emulsion erhalten wird, deren Gehalt an Wirksubstanz 25 % beträgt.

Beispiel 3

98,7 g eines Epoxydes aus 2,2-Bis(4'-hydroxyphenyl)-propan und Epichlorhydrin (0,1 Epoxygruppen eines Epoxydes, das 1,01 Epoxygruppenäquivalente/kg aufweist) werden in 39,4 g Aethylenglykolmonon-butyläther gelöst. Dieser Lösung werden 5 g Cyclohexylamin (0,05 Mol) und 14,5 g eines technischen Gemisches aus etwa 75 % dimerisierter $C_{36}$ Säure und etwa 25 % trimerisierter $C_{54}$ Säure auf Basis Linol- und Linolensäure zugegeben (0,05 Säureäquivalent des Gemisches, das 3,45 Säureäquivalente/kg aufweist). Das Reaktionsgemisch wird auf 100 °C geheizt und 3 Stunden bei dieser Temperatur gehalten.

Anschliessend wird das Reaktionsgemisch mit 78,8 g Perchloräthylen verdünnt. Man erhält eine klare, viskose Lösung des Umsetzungsproduktes, deren Gehalt 50 % und deren Säurezahl 12 beträgt.

90 g dieser Lösung des Umsetzungsproduktes werden nun mit 7,2 g einer 70 %igen Lösung von Hexamethylolmelamin-di- und tri-n-butyläther in n-Butanol bei Raumtemperatur vermischt. Der erhaltenen Mischung werden zu ihrer Aufarbeitung als Lederzurichtmittel 17 g einer 50 %igen wässrigen Lösung eines Umsetzungsproduktes aus 1 Mol Hydroabietylalkohol und 200 Mol Aethylenoxyd, das mit 1 % Hexamethylen-diisocyanat vernetzt ist, und 52,4 g Wasser unter Verwendung eines Emulgiergerätes zugesetzt. Man erhält eine feinteilige, lagerstabile, mit Wasser in jedem Verhältnis mischbare Oel-in-Wasser Emulsion, deren Gehalt an Wirksubstanz 30 % beträgt.

Beispiel 4

98,7 g eines Epoxydes aus 2,2-Bis-(4'-hydroxyphenyl)-propan und Epichlorhydrin (0,1 Epoxygruppenäquivalent) werden in 40 g Aethylenglykolmonobutyläther gelöst. Dieser Lösung werden 6,5 g n-Octylamin (0,05 Mol) und 14,5 g eines tecnischen Gemisches aus etwa 75 % dimerisierter $C_{36}$-Säure und etwa 25 % trimerisierter $C_{54}$-Säure auf der Basis von Linol- und Linolensäure zugegeben (0,05 Säureäquivalent).

Das Reaktionsgemisch wird auf 100 °C erhitzt und 3 Stunden bei dieser Temperatur gehalten. Danach gibt man 2,7 g Acrylnitril (0,05 Mol) hinzu, worauf der Ansatz während weiteren 3 Stunden bei 100 °C gehalten wird.

Durch Verdünnen des Reaktionsgemisches mit 82,4 g Perchloräthylen erhält man eine klare, viskose Harzlösung, deren Trockensubstanzgehalt 50 % und deren Säurezahl 18 beträgt.

90 g der Lösung des Umsetzungsproduktes werden nun mit 7,2 g einer 70 %igen Lösung von Hexamethylolmelamin-di- und -tributyläther in n-Butanol bei Raumtemperatur vermischt. Dann gibt man 17 g einer 50 %igen wässrigen Lösung eines Umsetzungsproduktes aus Hydroabietylalkohol und 200 Mol Aethylenoxyd, das mit 1 % Hexamethylendiisocyanat vernetzt ist hinzu, und emulgiert das Gemisch unter Verwendung eines Emulgiergerätes, wobei man langsam 52,4 g Wasser zugibt. Man erhält eine feinteilige, lagerstabile, mit Wasser in jedem Verhältnis mischbare Oel in Wasser-Emulsion, dessen Gehalt an Wirksubstanz 30 % beträgt.

Beispiel 5

87,7 g eines Epoxydes aus 2,2-Bis(4'-hydroxyphenyl)-propan und Epichlorhydrin (0,05 Epoxygruppenäquivalent eines Epoxydes, das 0,57 Epoxygruppenäquivalente/kg aufweist) werden in 27,5 g Essigsäurebutylester und 5 g n-Butanol gelöst. Dieser Lösung werden 2,3 g Anilin (0,025 Mol) und 7,25 g eines technischen Gemisches aus etwa 75 % dimerisierter $C_{36}$ Säure und etwa 25 % trimerisierter $C_{54}$ Säure auf der Basis von Linol- und Linolensäure zugegeben (0,025 Säureäquivalente des Gemisches, das 3,45 Säureaquivalente/kg aufweist). Das Reaktionsgemisch wird auf 100 °C erhitzt und 3 Stunden bei dieser Temperatur gehalten. Durch Verdünnen mit 65,5 g Perchloräthylen und 47,8 g Glykolsäurebutylester erhält man eine klare, viskose Lösung des Umsetzungsproduktes, deren Trockensubstanzgehalt 40 % und deren Säurezahl 17 beträgt.

180 g der Lösung des Umsetzungsproduktes werden dann mit 14,4 g einer 70 %igen Lösung von Hexamethylolmelamin-di- und -tributyläther in n-Butanol bei Raumtemperatur vermischt. Dann gibt man 34 g einer 50 %igen wässrigen Lösung eines Umsetzungsproduktes aus 1 Mol Hydroabietylalkohol und 200 Mol Aethylenoxyd, das mit 1 % Hexamethylendiisocyanat vernetzt ist hinzu, und emulgiert das Gemisch unter Verwendung eines Emulgiergerätes, wobei man langsam 99,6 g Wasser zugibt. Man erhält eine feinteilige, lagerstabile, mit Wasser in jedem Verhältnis mischvare Oel- in Wasser-Emulsion, deren Gehalt an Wirksubstanz 25 % beträgt.

Beispiel 6

98,7 g eines Epoxydes aus 2,2-Bis-(4'-hydroxyphenyl)-propan und Epichlorhydrin (0,1 Epoxygruppenäquivalente eines Epoxydes, das 1,01 Epoxygruppenäquivalente/kg aufweist) werden in 39 g Aethylenglykolmonobutyläther gelöst. Dieser Lösung werden 3,75 g 3-Aminopropanol (0,05 Mol) und 14,5 g eines technischen Gemisches aus etwa 80 % dimerisierter $C_{36}$-Säure und etwa 20 % trimerisierter $C_{54}$-Säure auf der Basis von Linol- und Linolensäure zugegeben (0,05 Säureäquivalente des Gemisches, das 3,45 Säureäquivalente/kg aufweist). Das Reaktionsgemisch wird auf 120 °C erhitzt und 7 Stunden bei dieser Temperatur gehalten. Durch Verdünnen des Reaktionsgemisches mit 77,7 g Cyclohexanon erhält man eine klare, viskose Harzlösung, deren Trockensubstanzgehalt 50 % und deren Säurezahl 12 beträgt.

61,5 g der Lösung des Umsetzungsproduktes werden mit 27,7 g einer 70 %igen Lösung von Hexamethylolmelamin-di- und -tributyläther in n-Butanol, 10 g eines Blockcopolymeren von Polypropylenglykol und Aethylenoxyd (MG : 14000) und 10 g Wasser vermischt. Man emulgiert das Gemisch unter Verwendung eines Emulgiergerätes wobei man langsam 90,8 g Wasser hinzugibt. Man erhält eine feinteilige, lagerstabile, mit Wasser in jedem Verhältnis mischbare Oel- in Wasser-Emulsion, deren Gehalt an Wirksubstanz 25 % beträgt.

Beispiel 7

112,5 g eines Epoxydes aus 2,2-Bis-(4'-hydroxyphenyl)-propan und Epichlorhydrin (0,25 Epoxygruppenäquivalente eines Epoxydes, das 2,2 Epoxygruppenäquivalente/kg aufweist) werden in 41,7 g Aethylenglykolmonobutyläther gelöst.

Dieser Lösung werden 7,3 g n-Butylamin (0,1 Mol) und 28,3 g eines technischen Gemisches aus etwa 80 % dimerisierter $C_{36}$-Säure und etwa 20 % trimerisierter $C_{54}$-Säure auf der Basis von Linol- und Linolensäure zugegeben (0,1 Säureäquivalente des Gemisches, das 3,53 Säureäquivalente/kg aufweist). Das Reaktionsgemisch wird 1 1/2 Stunden bei 100 °C gerührt. Anschliessend gibt man 3,4 g Epichlorhydrin (0,06 Mol) hinzu und rührt 30 Minuten bei 100 °C Innentemperatur. Durch Verdünnen des Reaktionsgemisches mit 185,4 g Perchloräthylen erhält man eine klare, viskose Harzlösung, deren Trockensubstanzgehalt 40 % und deren Säurezahl 18 beträgt.

225 g der Lösung des Umsetzungsproduktes werden mit 86,3 g einer 70 %igen Lösung von Hexamethylolmelamin-di- und -tributyläther in n-Butanol bei Raumtemperatur vermischt. Dann gibt man 60 g einer 50 %igen wässrigen Lösung eines Umsetzungsproduktes aus 1 Mol Hydroabietylalkohol und 200 Mol Aethylenoxyd, das mit 1 % Hexamethylendiisocyanat vernetzt ist, hinzu und emulgiert das Gemisch unter Verwendung eines Emulgiergerätes, wobei man langsam 128,7 g Wasser zugibt. Man erhält eine feinteilige, lagerstabile, mit Wasser in jedem Verhältnis mischbare Oel- in Wasser-Emulsion, deren Gehalt an Wirksubstanz 30 % beträgt.

Beispiel 8

153,6 g eines Epoxydes aus 2,2-Bis-(4'-hydroxyphenyl)-propan und Epichlorhydrin (0,24 Epoxygruppenäquivalent eines Epoxydes, das 1,56 Epoxygruppenäquivalente/kg aufweist) werden in 62,5 g Aethylenglykolmonobutyläther gelöst. Dann gibt man 34 g eines technischen Gemisches aus etwa 80 % dimerisierter $C_{36}$-Säure und etwa 20 % trimerisierter $C_{54}$-Säure auf der Basis von Linol- und Linolensäure hinzu (0,12 Säureäquivalente des Gemisches, das 3,53 Säureäquivalente/kg aufweist) und gibt anschliessend innerhalb von 15 Minuten eine Lösung aus 5,4 g Aethylamin (0,12 Mol) in 17,5 g Aethanol tropfenweise in das Reaktionsgemisch, wobei die Reaktionstemperatur 80 °C beträgt.

Anschliessend hält man das Reaktionsgemisch 3 Stunden bei 80 °C. Danach gibt man 1,7 g Acrylsäure (0,024 Mol) hinzu und hält die Temperatur weitere 30 Minuten bei 80 °C. Durch Verdünnen des Reaktionsgemisches mit 113,3 g Perchloräthylen erhält man eine klare, viskose Harzlösung, deren Trockensubstanzgehalt 50 % und deren Säurezahl 15 beträgt.

194 g der Lösung des Umsetzungsproduktes werden mit 93 g einer 70 %igen Lösung von Hexamethylolmelamin-di- und tributyläther in n-Butanol, 32,35 g eines Blockcopolymeren von Polypropylenglykol und Aethylenoxyd (MG : 14000) und 20 Teilen Wasser vermischt. Man emulgiert das Gemisch unter Verwendung eines Emulgiergerätes, wobei man langsam 199,65 g Wasser hinzugibt. Man erhält eine feinteilige, lagerstabile, mit Wasser in jedem Verhältnis mischbare Oel- in Wasser-Emulsion, deren Wirkstoffgehalt 30 % beträgt.

Beispiel 9

30 Teile einer Pigmentdispersion, die 20 % des Pigmentes C.I. 74160 (Pigment Blue 15) enthält, werden mit 300 Teilen der Emulsion gemäss Beispiel 1 und 10 Teilen Phosphorsäure vermischt und anschliessend mit Wasser auf 1 000 Teile verdünnt. Die so erhaltene Mischung wird dreimal kreuzweise auf blau gefärbtes Nappaleder gespritzt, wobei jeweils eine Zwischentrocknung während 1 Minute bei 60 °C erfolgt.

Das Leder wird anschliessend mit einer farblosen Glanzlösung aus 300 Teilen der Emulsion gemäss Beispiel 1,10 Teilen Phosphorsäure und 690 Teilen Wasser bei 25 bis 30 °C zweimal kreuzweise gespritzt. Hierauf wird das Leder während 2 Stunden bei 60 °C getrocknet und bei 100 °C/100 bar gebügelt.

Das so pigmentierte Leder weist sehr gute Trocken- und Nassreibechtheiten auf. Die Alkoholreibechtheit ist ebenfalls sehr gut. Die Zurichtung ist knickecht und zeichnet sich durch einen trockenen Griff aus.

Mit den Emulsionen gemäss Beispielen 2 bis 8 werden ähnliche Ergebnisse erzielt.

**Patentansprüche**

1. Mischungen aus Umsetzungsprodukten (1) und Aminoplastvorkondensaten (2), dadurch gekennzeichnet, dass sie

(1) 60 bis 90 Gewichtsprozent eines Umsetzungsproduktes aus

(a) 1 Epoxydgruppenäquivalent eines Epoxyds, das pro Molekül mindestens zwei Epoxygruppen aufweist,

(b) 0,4 bis 0,5 Mol eines primären Amins mit 2 bis 8 Kohlenstoffatomen,

(c) 0,4 bis 0,6 Säuregruppenäquivalent einer polymerisierten Fettsäure, die sich von monomeren, ungesättigten Fettsäuren mit 16 bis 22 Kohlenstoffatomen ableitet, und

(d) 0 bis 0,5 Mol einer difunktionellen Verbindung, die als funktionelle Gruppe mindestens eine Halogenalkyl-, Vinyl- oder Carbonsäureestergruppe und gegebenenfalls höchstens eine Epoxyd-, Carbonsäure-, Hydroxyl- oder Nitrilgruppe aufweist, und

(2) 10 bis 40 Gewichtsprozent eines mit Alkyl mit 1 bis 6 Kohlenstoffatomen verätherten Aminoplastvorkondensats

enthalten.

2. Mischungen nach Anspruch 1, dadurch gekennzeichnet, dass man als Reaktionskomponente (a) ein Polyglycidyläther des 2,2-Bis(4'-hydroxyphenyl)-propans einsetzt.

3. Mischungen nach einem der Ansprüche 1 oder 2, dadurch gekennzeichnet, dass man als Reaktionskomponente (b) ein primäres Cycloalkyl- oder Alkylamin mit 2 bis 8 Kohlenstoffatomen einsetzt.

4. Mischungen nach einem der Ansprüche 1 bis 3, dadurch gekennzeichnet, dass man als Reaktionskomponente (c) eine di- bis trimerisierte Fettsäure einsetzt, die sich von monomeren, ungesättigten Fettsäuren mit 16 bis 18 Kohlenstoffatomen ableitet.

5. Mischungen nach einem der Ansprüche 1 bis 4, dadurch gekennzeichnet, dass man als Mischungskomponente (2) einen verätherten und methylolierten Harnstoff, Harnstoffderivat oder ein methyloliertes und veräthertes Aminotriazin einsetzt.

6. Verfahren zur Herstellung der Mischungen gemäss einem der Ansprüche 1 bis 5 dadurch gekennzeichnet, dass man die Reaktionskomponenten (a), (b) und (c) gleichzeitig und anschliessend gegebenenfalls die Reaktionskomponente (d) zum Umsetzungsprodukt (1) miteinander umsetzt und das so erhaltene Umsetzungsprodukt (1) mit des Mischungskomponente (2) anschliessend vermischt.

7. Verwendung der Mischungen gemäss einem der Ansprüche 1 bis 5 als Lederzurichtmittel.

8. Verfahren zum Zurichten von Leder, dadurch gekennzeichnet, dass man eine organisch-wässrige Zubereitung, die Mischungen gemäss einem der Ansprüche 1 bis 7 enthält, auf das Leder aufbringt und das Leder anschliessend bei erhöhter Temperatur trocknet und gegebenenfalls einer Wärmenachbehandlung unter Druck unterwirft.

9. Wässrig-organische Zubereitung zur Durchführung des Verfahrens nach Anspruch 8, dadurch gekennzeichnet, dass sie eine Mischung der in Ansprüchen 1 bis 5 angegebenen Art, gegebenenfalls einen Emulgator, einen Vernetzungskatalysator, ein Lederpigment und ein Lederhilfsmittel enthält.

10. Das nach dem Verfahren nach Anspruch 8 zugerichtete Leder.

**Claims**

1. A mixture of a reaction product (1) and an aminoplast precondensate (2), which mixture contains

(1) 60 to 90 % by weight of a reaction product obtained from the following reactants

(a) 1 epoxide group equivalent of an epoxide having at least two epoxy groups per molecule,

(b) 0.4 to 0.5 mol of a primary amine having 2 to 8 carbon atoms,

(c) 0.4 to 0.6 acid group equivalent of a polymerised fatty acid which is derived from monomeric, unsaturated fatty acids having 16 to 22 carbon atoms, and

(d) 0 to 0.5 mol of a difunctional compound which contains, as functional group, at least one haloalkyl, vinyl or carboxylic acid ester group, and optionally at most one epoxide, carboxylic acid, hydroxyl or nitrile group, and

(2) 10 to 40 % by weight of an aminoplast precondensate etherified by alkyl having 1 to 6 carbon atoms.

2. A mixture according to claim 1, wherein the reactant (a) is a polyglycidyl ether of 2,2-bis(4'-hydroxyphenyl)-propane.

3. A mixture according to either of claims 1 or 2, wherein the reactant (b) is a primary cycloalkylamine or alkylamine having 2 to 8 carbon atoms.

4. A mixture according to any one of claims 1 to 3, wherein the reactant (c) is a dimerised or trimerised fatty acid which is derived from a monomeric, unsaturated fatty acid having 16 to 18 carbon atoms.

5. A mixture according to any one of claims 1 to 4, wherein component (2) is an etherified and methylolated urea or urea derivative or a methylolated and etherified aminotriazine.

6. A process for the preparation of a mixture according to any one of claims 1 to 5, which comprises reacting the reactants (a), (b) and (c) simultaneously with one another, and then optionally with reactant (d), to give the reaction product (1), and subsequently mixing the latter with component (2).

7. Use of a mixture according to any one of claims 1 to 5 as a leather finishing agent.

8. A process for finishing leather, which comprises applying an organic-aqueous preparation, which contains a mixture according to any one of claims 1 to 7, to leather and then drying the leather at an elevated temperature and optionally subjecting it to a heat after-treatment under pressure.

9. An aqueous-organic preparation for carrying out the process according to claim 8, which preparation contains a mixture of the type as claimed in any one of claims 1 to 5, optionally an emulsifier, a cross-linking catalyst, a leather pigment and a leather auxiliary.

10. The leather finished by the process according to claim 8.

**Revendications**

1. Mélanges de produits de réaction (1) et de précondensats d'aminoplaste (2), caractérisés en ce qu'ils contiennent

(1) 60 à 90 pour cent en poids d'un produit de réaction constitué

(a) de 1 équivalent de groupe époxyde d'un époxyde présentant par molécule au moins deux groupes époxyde,

(b) de 0,4 à 0,5 mole d'une amine primaire de 2 à 8 atomes de carbone,

(c) de 0,4 à 0,6 équivalent de groupe acide d'un acide gras polymérisé, qui dérive d'acides gras monomères insaturés de 16 à 22 atomes de carbone, et

(d) de 0 à 0,5 mole d'un composé bifonctionnel présentant à titre de groupe fonctionnel au moins un groupe halogénoalkyle, vinyle ou ester d'acide carboxylique et éventuellement au plus un groupe époxyde, acide carboxylique, hydroxyle ou nitrile, et

(2) 10 à 40 pour cent en poids d'un précondensat d'aminoplaste éthérifié par un radical alkyle de 1 à 6 atomes de carbone.

2. Mélanges selon la revendication 1, caractérisés en ce qu'on utilise en tant que constituant de réaction (a) un polyglycidyléther du 2,2-bis(4'-hydroxyphényl) propane.

3. Mélanges selon l'une des revendications 1 ou 2, caractérisés en ce qu'on utilise en tant que constituant de réaction (b) une cycloalkyl- ou alkylamine primaire de 2 à 8 atomes de carbone.

4. Mélanges selon l'une des revendications 1 à 3, caractérisés en ce qu'on utilise en tant que constituant de réaction (c) un alcool gras di- à trimérisé qui dérive d'acides gras monomères insaturés de 16 à 18 atomes de carbone.

5. Mélanges selon l'une des revendications 1 à 4, caractérisés en ce qu'on utilise en tant que constituant du mélange (2) une urée éthérifiée et méthylolée, un dérivé de l'urée ou une aminotriazine méthylolée et éthérifiée.

6. Procédé de préparation des mélanges selon l'une des revendications 1 à 5, caractérisé en ce qu'on fait réagir les uns sur les autres les constituants de réaction (a), (b) et (c), simultanément et, ensuite, éventuellement le constituant de réaction (d) pour obtenir le produit de réaction (1), et qu'on mélange ensuite le produit de réaction (1) ainsi obtenu au constituant de mélange (2).

7. Utilisation des mélanges selon l'une des revendications 1 à 5 en tant qu'agent de finition dans la fabrication du cuir.

8. Procédé de finition du cuir, caractérisé en ce qu'on applique sur le cuir une préparation organique aqueuse contenant les mélanges selon l'une des revendications 1 à 7, et qu'on sèche ensuite le cuir à haute température et le soumet éventuellement à un post-traitement thermique sous pression.

9. Préparation organique aqueuse pour la mise en œuvre du procédé selon la revendication 8, caractérisée en ce qu'elle contient un mélange du type indiqué dans les revendications 1 à 5, éventuellement un émulsifiant, un catalyseur de réticulation, un pigment pour cuir et un adjuvant pour cuir.

10. Cuir, préparé par le procédé selon la revendication 8.